**Europäisches Patentamt**

**European Patent Office**

**Office européen des brevets**

(11) Veröffentlichungsnummer: **0 199 353**
**A2**

## (12) EUROPÄISCHE PATENTANMELDUNG

(21) Anmeldenummer: **86105645.5**

(22) Anmeldetag: **24.04.86**

(51) Int. Cl.⁴: **H 01 G 1/02**
**H 01 G 4/24**

(30) Priorität: **25.04.85 DE 3514936**

(43) Veröffentlichungstag der Anmeldung:
**29.10.86 Patentblatt 86/44**

(84) Benannte Vertragsstaaten:
**DE GB IT**

(71) Anmelder: **ROBERT BOSCH GMBH**
**Postfach 50**
**D-7000 Stuttgart 1(DE)**

(72) Erfinder: **Moosbrugger, Egon**
**Landhausstrasse 114**
**D-7000 Stuttgart(DE)**

(54) **Selbstheilender elektrischer Kondensator.**

(57) Es wird ein selbstheilender elektrischer Kondensator vorgeschlagen, der auch über eine lange Gebrauchsdauer hinweg nur einen geringen Kapazitätsverlust und einen geringen Verlustfaktor aufweist. Der Kondensator enthält eine Vergußmasse aus mit polyfunktionellen Isocyanaten vernetztem Rizinusöl. Besonders vorteilhaft ist es, wenn das Rizinusöl, bezogen auf das stöchiometrische Verhältnis zu den polyfunktionellen Isocyanaten, im Überschuß in der Rizinusöl/Isocyanat-Mischung enthalten ist.

FIG.1

EP 0 199 353 A2

R. **19 985**

22.4.1985 Pf/Jä

ROBERT BOSCH GMBH, 7000 Stuttgart 1

Selbstheilender elektrischer Kondensator

Stand der Technik

Die Erfindung geht aus von einem Kondensator nach der
Gattung des Hauptanspruchs. In der Kondensatortechnik
wird Rizinusöl als Füll- und/oder Imprägniermittel von
Wickelkondensatoren eingesetzt. Dazu wird beispielsweise
ein Kondensatorwickel, der als Dielektrikum Kunststoff-
Folienbänder und als Elektroden aufgedampfte Metallbeläge aufweist, in ein Metallgehäuse eingebaut und dieses
mit Rizinusöl gefüllt.

Das Rizinusöl dient in diesem Fall als Wärmeübertragungsmedium und hydraulisches Druckübertragungsmittel, das
im Falle einer Schädigung des Wickels eine Formänderung
des Gehäuses bewirkt und über eine Abreißsicherung die
Stromzufuhr unterbricht.

Bei einer Füllung mit Rizinusöl dringt dieses in unvermeidliche Lockerstellen des Kondensatorwickels ein, vor
allem am Wickelende und im Stirnbereich. An diesen
Stellen verhindert das Rizinusöl Teilentladungen und
Durchschläge, die zu einem unerwünschten Kapazitätsverlust führen.

. . .

Der Nachteil einer Flüssigfüllung ist, daß Rizinusöl im
Laufe der Betriebszeit in stärkerem Maße in den Wickel
eindringt und sogar das feste Dielektrikum anquillt,
wenn es durch Diffusionsprozesse in die Folie gelangt.
Wegen der hohen dielektrischen Verluste des Rizinusöls
bedeutet dies, daß Verlustfaktor und Eigenerwärmung des
Kondensators während der Betriebszeit zunehmen. Ein weiterer Nachteil dieser Ausführung besteht in der erhöhten
Brandgefahr, falls das Kondensatorgehäuse platzt und
flüssiges Rizinusöl austritt, das sich entzünden kann.

Eine andere Kondensatortechnologie betrifft den trockenen
Einbau des Kondensatorwickels. Dazu wird der Raum zwischen
Wickel und Gehäusewandung mit einer flüssigen Harzmischung
ausgefüllt. Nach dem Härtungsprozeß schützt die feste
Harzummantelung den Wickel vor schädlichen Einflüssen.

Im elektrischen Verhalten zeichnen sich diese Kondensatoren
dadurch aus, daß die Verlustleistung weitestgehend unabhängig von der Beanspruchungsdauer ist. Oftmals beobachtet
man aber einen ausgeprägten Kapazitätsverlust, der durch
gehäufte Durchschläge, sogenannte Durchschlagsnester,
vor allem am Wickelende entsteht.

Vorteile der Erfindung

Der erfindungsgemäße Kondensator mit den kennzeichnenden
Merkmalen des Hauptanspruchs hat demgegenüber den Vorteil, daß er die positiven Eigenschaften beider Varianten
- praktisch kein Kapazitätsverlust und kein Anstieg des
Verlustfaktors - miteinander verbindet, ohne die oben
beschriebenen Nachteile mit zu übernehmen. Durch die in
den Unteransprüchen aufgeführten Maßnahmen sind vorteilhafte Weiterbildungen und Verbesserungen des im Haupt-

...

0199353

anspruch angegebenen Kondensators möglich. Besonders
vorteilhaft ist es, wenn das Rizinusöl, bezogen auf
das stöchiometrische Verhältnis zu den polyfunktionellen
Isocyanaten, im Überschuß in der Rizinus-Isocyanat-
Mischung enthalten ist.

Der erfindungsgemäße Kondensator ist ein selbstheilender
elektrischer Kondensator, der aus einem oder mehreren
Kondensatorwickeln aufgebaut ist. Der Wickel besteht
vorzugsweise aus metallisierten Kunststoffbändern, insbesondere aus zinkmetallisiertem Polypropylen. Der Wickel
wird in eine Gehäuse, vorzugsweise aus Aluminium oder
Kunststoff, eingebaut und der Raum zwischen Wickel und
Gehäuse ganz oder teilweise mit einem Harzverguß ausgefüllt.

Erfindungsgemäß besteht der Verguß aus mit polyfunktionellen Isocyanaten vernetztem Rizinusöl. Die Möglichkeit, Rizinusöl mit polyfunktionellen Isocyanaten auszuhärten, ist zwar von der Polyurethanchemie her bekannt,
der erfindungsgemäße Einsatz bringt aber gegenüber üblichen Polyurethanharzen in bezug auf die Kapazitätskonstanz des Kondensators vergleichbare Ergebnisse,
wie sie bei Kondensatoren gemessen werden, die mit
flüssigem Rizinusöl gefüllt sind.

Wird die flüssige Rizinusöl/Isocyanat-Mischung in den
Kondensator gegeben, kann die Harzmischung in Lockerstellen des Kondensatorwickels, vor allem am Wickelende und im Stirnbereich, eindringen. Dies ist um so
leichter möglich, je länger die Mischung fließfähig
bleibt. Es hat sich daher als vorteilhaft erwiesen,

...

wenn die Mischung mindestens 30 Minuten lang fließfähig
bleibt, was am einfachsten erreicht wird, wenn die
Härtungstemperatur kleiner 75 °C gehalten wird.

Mischt man das Rizinusöl mit den polyfunktionellen Isocyanaten im stöchiometrischen Verhältnis, d. h. findet
zumindest rechnerisch jedes vernetzungsfähige Rizinusölmolekül einen Isocyanatreaktionspartner, stellt man an
mit dieser Harzmischung vergossenen Kondensatoren nach
längerer Betriebszeit einen überproportionalen Kapazitätsverlust fest. Dieses Verhalten kann man so deuten,
daß das ausgehärtete Rizinusöl in den Lockerstellen
"verbraucht" ist. Im Gegensatz dazu kann in flüssig
gefüllten Kondensatoren das Rizinusöl in den Lockerstellen sich ständig erneuern bzw. nachdiffundieren,
was zu einer ausgezeichneten Kapazitätskonstanz führt.

Dem Nachteil des unerwünschten Kapazitätsverlustes bei
Kondensatoren mit ausgehärtetem Rizinusöl kann man dadurch begegnen, daß das Rizinusöl, bezogen auf das stöchiometrische Verhältnis zu den polyfunktionellen Isocyanaten,
im Überschuß in die Rizinusöl/Isocyanat-Mischung eingebracht wird, vorzugsweise im Überschuß von 20 bis 80 Gew.-%.
In diesem Falle sind im ausgehärteten Harzgerüst einige
Riziniusölmoleküle frei beweglich und können in den aktiven
Wickelbereich eindiffundieren und so zu positiven Ergebnissen führen. Dieses Eindringen von Rizinusölmolekülen
ist jedoch mengenmäßig nicht so stark wie in flüssig gefüllten Kondensatoren, d. h. der Verlustfaktor steigt
nicht so stark an im Laufe der Betriebszeit.

Zeichnung

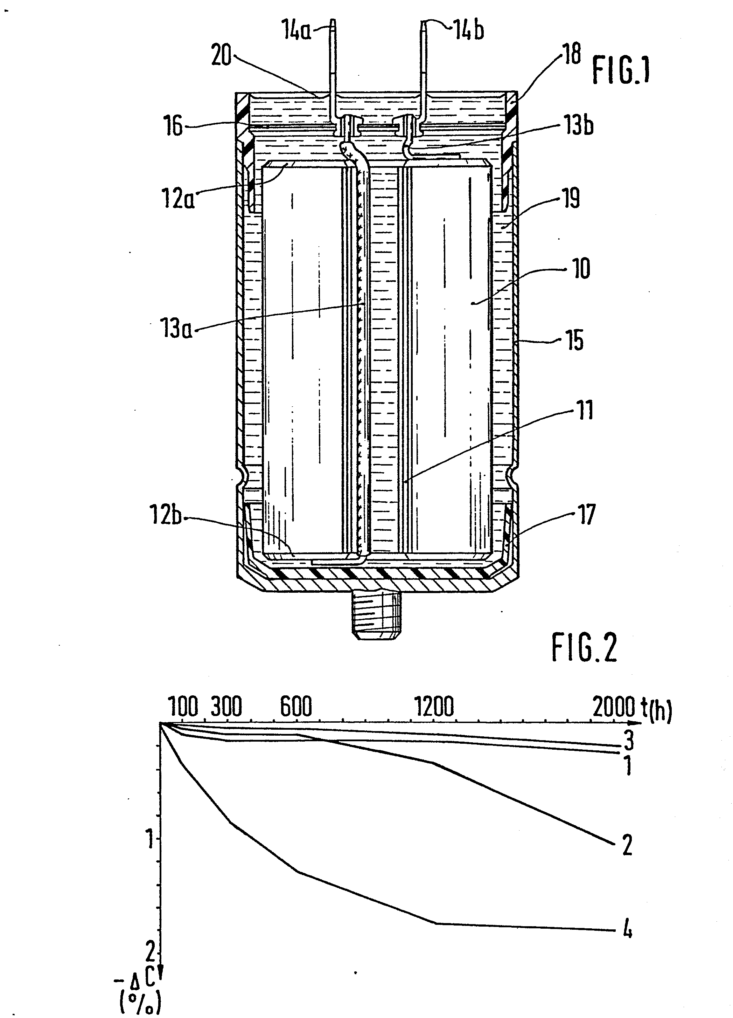

Ein Ausführungsbeispiel der Erfindung ist in der Zeichnung dargestellt und in der nachfolgenden Beschreibung näher erläutert. Es zeigen Figur 1 einen Schnitt durch
einen selbstheilenden Kondensator und Figur 2 die
grafische Darstellung des Kapazitätsverlustes in Abhängigkeit von der Zeit unter Verwendung verschiedener Füllmassen.

Beschreibung des Ausführungsbeispiels

In Figur 1 ist ein selbstheilender elektrischer Kondensator dargestellt. Der Rundwickel 10 besteht aus zwei
Bändern aus zinkmetallisierter Polypropylenfolie, die
auf ein festes Kernrohr 11 aus Polypropylen gewickelt
sind. Die beiden Zinkbeläge sind durch aufgeschoopte
Metallbrücken 12a und 12b kontaktiert, die über die Anschlußleitungen 13a und 13b mit den äußeren Kondensatoranschlüssen 14a und 14b elektrisch leitend verbunden sind.
Der Wickel 10 ist in ein zylindrisches Bechergehäuse 15
aus Aluminium eingebaut. Eine Trägerplatte 16 dient als
Befestigung der Anschlüsse 14a und 14b. Eine Isolierkappe
17 und ein Isolierring 18 dienen der Isolation zwischen
Wickel 10 und Gehäuse 15. Der Wickel 10 ist durch einen
Verguß 19 aus einer Mischung aus Rizinusöl und polyfunktionellen Isocyanaten vollständig umhüllt. Der Verguß 19 reicht bis zur Trägerplatte 16. Ein Deckverguß
20 wird nach dem Aushärten des Vergusses 19 aufgebracht
und besteht aus dem gleichen oder aber auch aus einem
anderen Material wie der Verguß 19.

Nach dem Einbau des Wickels 10 in das Gehäuse 15 wird
der verbleibende Raum vollständig mit einer Vergußmasse
ausgefüllt, die aus 100 Gew.-Teile Rizinusöl und 42 Gew.-
Teile Diphenylmethan-4,4'-diisocyanat im Gemisch mit poly-

. . .

**0199353**

meren Anteilen (Isocyanatgehalt 32 Gew.-% NCO) besteht. Diese Vergußmasse wurde dann 2 Stunden lang bei
70 ° ausgehärtet.

Zu Vergleichszwecken wurden entsprechende Kondensatoren
hergestellt, die andere Füllstoffe oder die Komponenten
in anderen Verhältnissen enthielten, wie weiter unten
noch ausgeführt wird.

Diese Kondensatoren wurden einer vergleichenden Dauerspannungsprüfung bei 530 V Wechselspannung und 85 °C über
2 000 Stunden unterzogen. Die Ergebnisse dieser Vergleichsmessungen sind zum einen in Figur 2 dargestellt,
zum anderen in der nachfolgenden Tabelle aufgeführt. Dabei ist in Figur 2 der Kapazitätsverlust gegen die Zeit
aufgetragen in Abhängigkeit von den verschiedenen Kondensatorfüllungen. In der Tabelle sind die 50 Hz-Verlustfaktoren tan $\delta$ bei 500 V Wechselspannung in Abhängigkeit von der Füllung des Kondensators aufgeführt.

| Nr. | Verguß | tan $\delta$ (0/00) |
|---|---|---|
| 1 | Flüssigfüllung mit Rizinusöl | 0,80 |
| 2 | Rizinusöl + handelsüblicher Isocyanat-<br>härter im stöchiometrischen Verhältnis | 0,30 |
| 3 | Rizinusöl im Überschuß von 40 Gewichts-<br>prozent + handelsüblicher Isocyanat-<br>härter | 0,33 |
| 4 | handelü_bliches Polyurethanharz | 0,38 |

Tabelle: 50 Hz-Verlustfaktor tan $\delta$ bei 500 V~ nach
2 000 h Betriebsdauer 530 V~ / 85 °C

. . .

Die in Figur 2 und in der Tabelle angegeben Werte stellen Mittelwerte von jeweils 10 Kondensatoren dar. Die Kondensatoren mit den verschiedenen Füllungen sind jeweils mit den Ziffern 1 bis 4 bezeichnet. Für die jeweiligen Beispiele ergeben sich aus Figur 2 und der obigen Tabelle folgende Ergebnisse:

(1)  Mit Rizinusöl flüssig gefüllte Kondensatoren: geringer, von der Betriebszeit annähernd unabhängiger Kapazitätsverlust, aber hoher Verlustfaktor nach 2 000 Stunden.

(2)  Vergossene Kondensatoren mit einer Mischung aus Rizinusöl und dem obengenannten Isocyanathärter im stöchiometrischen Verhältnis. Nach kurzer Betriebszeit ist der Kapazitätsverlust sehr gering, nimmt aber nach 600 Stunden stark zu. Der Verlustfaktor ist klein.

(3)  Vergossene Kondensatoren mit einem, bezogen auf das stöchiometrische Verhältnis, Rizinusölüberschuß von 40 Gew.-%. Die Kapazität bleibt über der Betriebszeit nahezu unverändert und der Verlustfaktor ist gering. Dies ist die besonders bevorzugte Ausführungsform der Erfindung.

(4)  Vergossene Kondensatoren mit einem handelsüblichen Polyurethanverguß. Die Kapazität nimmt vor allem in den ersten Betriebsstunden deutlich ab. Der Verlustfaktor ist klein.

Betrachtet man die Ergebnisse insgesamt, so ergibt sich zunächst aus Figur 2, daß die Beispiele 1 und 3, d. h. der Kondensator mit einer Flüssigfüllung aus Rizinusöl

...

R. 19985

und der mit Rizinusöl und einem unterstöchiometrischen
Gehalt an Isocyanathärter über die gesamte Versuchsdauer
von 2 000 Stunden einen nur sehr geringen Kapazitätsverlust erleiden. Aus obiger Tabelle ergibt sich jedoch,
daß der Kondensator mit der Flüssigfüllung aus Rizinusöl
einen verhältnismäßig hohen Verlustfaktor aufweist. Daraus
ergibt sich die große Überlegenheit der besonders bevorzugten Ausführungsform 3 - Rizinusöl mit einer unterstöchiometrischen Menge an Isocyanathärter - für die Herstellung von selbstheilenden elektrischen Kondensatoren.

Durch die Zugabe von mineralischen Füllstoffen in einer
Menge von 50 bis 120 Gew.-%, bezogen auf die Rizinusölmenge, werden die mechanische Festigkeit und das Wärmeübertragungsvermögen der Ummantelung erhöht und die Kosten
der Harzmischung verringert. Dieser Füllstoff kann beispielsweise Kreide sein. Zur Verhinderung von Blasenbildung während des Aushärtprozesses empfiehlt es sich,
bezogen auf die Rizinusölmenge, 5 bis 10 Gew.-% eines
Zeoliths in die Mischung zu geben. Der Zeolith bindet
die kaum zu vermeidende Restfeuchtigkeit der Mischung
und verhindert, daß Wasser mit dem Isocyanathärter
unter Abspaltung von Kohlendioxid reagiert, was zu Blasenbildung führt. Außerdem können weitere übliche Hilfsstoffe von Vorteil sein wie Stabilisatoren, Katalysatoren,
Entschäumer, Antioxidantien, Farbstoffe, Lichtschutzmittel oder Flammschutzmittel.

R. 19985
22.4.1985 Pf/Jä

ROBERT BOSCH GMBH, 7000 Stuttgart 1

Ansprüche

1. Selbstheilender elektrischer Kondensator mit mindestens
einem Kondensatorwickel, der als Dielektrikum Isolierstoffbänder, insbesondere Kunststoffbänder, und als Elektroden
dünne, vorzugsweise im Vakuum aufgedampfte Metallschichten
aufweist, mit einem den Wickel umschließenden Gehäuse und
mit einer Vergußmasse, die den Raum zwischen Wickel und
Gehäuse ganz oder teilweise ausfüllt, dadurch gekennzeichnet, daß die Vergußmasse aus mit polyfunktionellen Isocyanaten vernetztem Rizinusöl besteht.

2. Kondensator nach Anspruch 1, dadurch gekennzeichnet,
daß das Rizinusöl, bezogen auf das stöchiometrische Verhältnis zu den polyfunktionellen Isocyanaten, im Überschuß in der Rizinusöl/Isocyanat-Mischung enthalten ist.

3. Kondensator nach Anspruch 2, dadurch gekennzeichnet,
daß der Überschuß 20 bis 80 Gew.-% beträgt.

4. Kondensator nach einem der Ansprüche 1 bis 3, dadurch gekennzeichnet, daß die Rizinusöl/Isocyanat-Mischung,
bezogen auf die Rizinusölmenge, 5 bis 10 Gew.-% eines
Zeoliths enthält.

...

0199353

5. Kondensator nach einem der vorhergehenden Ansprüche, dadurch gekennzeichnet, daß die Rizinusöl/Isocyanat-Mischung, bezogen auf die Rizinusölmenge, 50 bis 120 Gew.-% eines mineralischen Füllstoffes enthält.

6. Kondensator nach Anspruch 5, dadurch gekennzeichnet, daß der mineralische Füllstoff Kreide ist.

7. Kondensator nach einem der vorhergehenden Ansprüche, dadurch gekennzeichnet, daß die Vergußmasse Hilfsstoffe wie Stabilisatoren, Katalysatoren, Entschäumer, Antioxidantien, Farbstoffe, Lichtschutzmittel oder Flammschutzmittel enthält.

8. Verfahren zur Herstellung eines Kondensators nach einem der Ansprüche 1 bis 7, dadurch gekennzeichnet, daß die Härtungsbedingungen der Riziniusöl/Isocyanat-Mischung so gewählt werden, daß sie innerhalb der ersten 30 Minuten der Aushärtezeit fließfähig bleibt.

9. Verfahren nach Anspruch 8, dadurch gekennzeichnet, daß die Rizinusöl/Isocyanat-Mischung bei einer Temperatur kleiner 75 °C ausgehärtet wird.

10. Verwendung von mit polyfunktionellen Isocyanaten vernetztem Rizinusöl als Vergußmasse für selbstheilende elektrische Kondensatoren.

FIG.1

FIG.2